# EUROPÄISCHE PATENTSCHRIFT

(11) **EP 0 662 404 B1**
(45) Veröffentlichungstag und Bekanntmachung des Hinweises auf die Patenterteilung: **21.01.1998**
(21) Anmeldenummer: 94116861.9
(22) Anmeldetag: 26.10.1994
(51) Int. Cl.: B60N 2/48

(54) **Kopfstütze für Kraftfahrzeuge**
Headrest for automotive vehicles
Appui-tête pour véhicules automobiles

(30) Priorität: 11.01.1994 DE 9400352 U
(43) Veröffentlichungstag der Anmeldung: 12.07.1995
(73) Patentinhaber: R. SCHMIDT GMBH, D-57368 Lennestadt (DE)
(72) Erfinder: Stenzel, Wolfgang, D-37574 Einbeck (DE)
(74) Vertreter: Köchling, Conrad-Joachim

(56) Entgegenhaltungen:
- DE-U- 9 400 352
- FR-A- 2 377 898
- US-A- 2 634 798
- US-A- 2 756 808
- US-A- 3 151 911
- US-A- 3 464 751

## Beschreibung

Die Erfindung betrifft eine Kopfstütze für Kraftfahrzeuge, bestehend aus einer im wesentlichen U-förmigen oder M-förmigen Halterungsstange mit einer den eigentlichen Stützbereich umgebenen Umhüllung aus Schaumstoff, wobei auf den Stützbereich der Halterungsstange eine hohle Haube aufgesteckt ist und die Umhüllung aus Schaumstoff auf die Haube aufgebracht ist.

Eine derartige Kopfstütze ist aus der US-A-3464751 bekannt.

Ferner sind im Stand der Technik Kopfstützen bekannt, bei denen die Halterungsstange aus Rundmaterial besteht und vorzugsweise etwa M-förmig geformt ist, um im Anlagebereich des Kopfes eine relativ große stabile Anlagefläche zu bilden. Die Halterungsstange ist in dem Bereich, der den eigentlichen Stützbereich bildet, mit einer großvolumigen Umschäumung, vorzugsweise aus Weichschaum, umgeben, der vorzugsweise mit einem Überzug, beispielsweise aus textilem Werkstoff versehen ist, oder aber der anlagebereich ist mit einem hinterschäumten Bezug versehen. Die großvolumige Umschäumung dient dazu, das Durchdrücken des Stangenprofils zu vermeiden.

Derartige Kopfstützen sind zwar sehr kostengünstig zu fertigen, jedoch sind sie insofern nachteilig, als im Falle eines Unfalles Fremdkörper, beispielsweise Glassplitter oder dergleichen, durch die Umschäumung und damit durch die Kopfstütze dringen können.

Ausgehend von diesem Stand der Technik liegt der Erfindung die Aufgabe zugrunde, eine Kopfstütze gattungsgemäßer Art zu schaffen, die bei weiterhin kostengünstiger Fertigung das Durchdringen von Fremdkörpern weitestgehend unterbindet.

Zur Lösung dieser Aufgabe wird vorgeschlagen, daß die Halterungsstange parallel zueinander abragende Einsteckenden aufweist, die Haube im Querschnitt flach U-förmig ausgebildet ist, so daß ihr Boden an den entsprechenden, den Einsteckenden der Halterungsstange abgewandten Basisbereichen der Halterungsstange anliegt, die Haube auf die Basis der Halterungsstange aufrastbar ist, wobei die Rastmittel an der Haube angeformt sind und in das Haubeninnere vorragen.

Dadurch, daß auf den Stützbereich der Halterungsstange eine Haube aufgesteckt ist, die man von einer großvolumigen Umschäumung umgeben ist, wird erreicht, daß ein Durchdringen von Fremdkörpern, wie beispielsweise Glassplittern, weitestgehend unterbunden ist. Zudem wird durch diese Ausbildung erreicht, daß insbesondere beim Umschäumen der Halterungsstange weniger Schaummaterial eingesetzt werden muß, da ein wesentliches Volumen schon von der aufgesteckten Haube eingenommen ist.

Die erfindungsgemäße Ausbildung ermöglicht es zudem, daß anstelle von bisher üblichen M-förmigen Halterungsstangen auch U-förmige Halterungsstangen eingesetzt werden können, die kostengünstiger zu fertigen und Belastungskräfte flächig aufnimmt und verteilen kann. Damit ist es möglich, die Kopfstütze trotz der zusätzlich anzuordnenden Haube praktisch zu gleichen Kosten zu fertigen und vorzuhalten, wie dies bei M-förmigen unmittelbar umschäumten Bügeln bisher üblich ist.

Durch die Anordnung und Gestaltung der vorzugsweise aus Kunststoff bestehenden Haube wird auch ein guter Energieabbau bei einem Kopfaufprall erreicht.

Durch diese Ausbildung ist eine selbstarretierende reibschlüssige Aufsteckverbindung der Haube auf der Halterungsstange ermöglicht.

Durch die erfindungsgemäße Ausbildung wird auch eine sehr sichere Halterung der Haube auf der Halterungsstange gewährleistet.

Zusätzlich kann noch vorgesehen sein, daß die Haube mündungsseitig durch einen umlaufenden, vorzugsweise nach außen vorragenden Wulstrand versteift ist.

Ein Ausführungsbeispiel der Erfindung ist in der Zeichnung dargestellt und im folgenden näher beschrieben.

Es zeigt:
Figur 1 eine erfindungsgemäße Kopfstütze in Ansicht, teilweise geschnitten;
Figur 2 desgleichen im Schnitt II-II der Figur 1 gesehen;
Figur 3 eine Einzelheit in der Ansicht gemäß Figur 1;
Figur 4 die Einzelheit von unten gesehen;
Figur 5 die Einzelheit im Querschnitt gesehen.
Figur 6 + 7 eine Variante.

Die Kopfstütze besteht aus einer im Ausführungsbeispiel M-förmigen Halterungsstange 1 mit zwei parallel zueinander abragenden Einsteckenden 2 mit Rastabschnitten und einer den eigentlichen Stützbereich umgebenden Umhüllung aus Schaumstoff 3. Auf den Stützbereich der Halterungsstange 1 ist eine hohle Haube 4 aufgesteckt, die aus Kunststoff besteht, wohingegen die Halterungsstange 1 aus Metall besteht. Die Schaumstoffumhüllung 3 ist auf die Haube 4 außenseitig aufgebracht. Sie kann auf die Haube 4 aufgespritzt oder auch vorgefertigt und auf die Haube aufgeschoben sein. Die Schaumstoffumhüllung 3 kann zusätzlich von einer Hülle, beispielsweise aus textilem Material, umgeben sein.

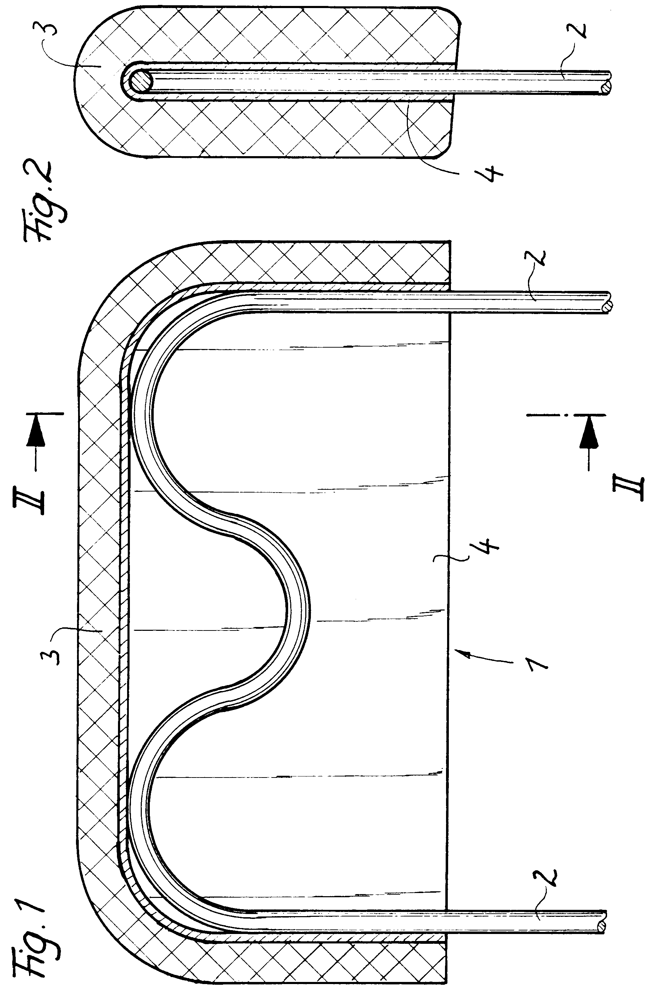

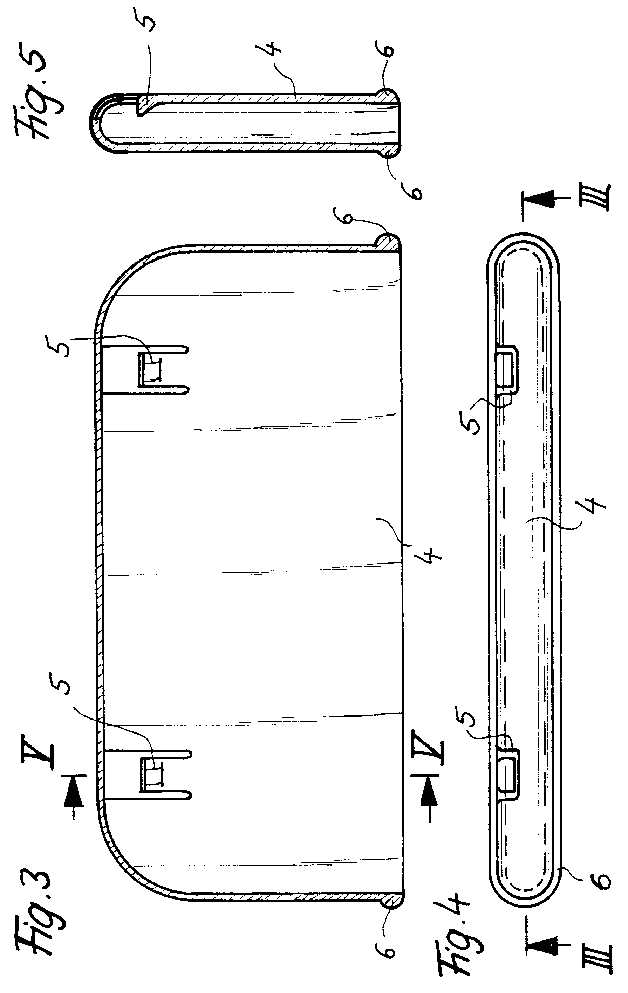

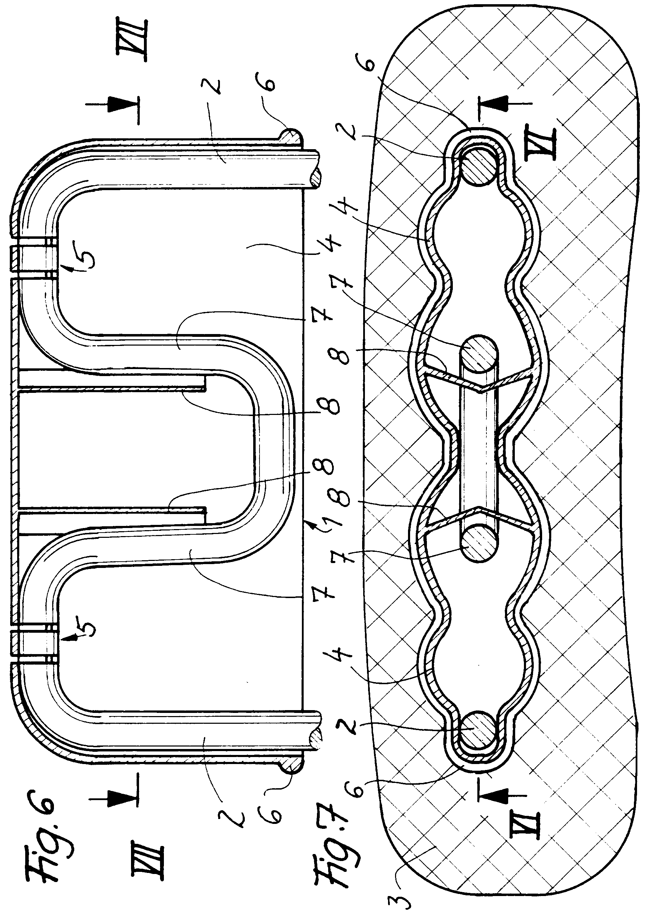

Die Haube 4 ist im Querschnitt flach U-förmig ausgebildet, wie insbesondere aus den Figuren 3 bis 5 ersichtlich. In der Montagesollposition liegen ihre Stirnflächen an den entsprechenden Stirnbereichen der Halterungsstange 1, ihre Seitenflächen an den entsprechenden einander abgewandten Seitenbereichen und ihr Boden an den entsprechenden, den Einsteckenden 2 abgewandten Basisbereichen der Halterungsstange 1 an. Zur Sicherung der Montagesollposition ist die Haube 4 auf die Basis der Halterungsstange 1 aufrastbar, wobei die entsprechenden Rastmittel 5 an der Haube angeformt sind und in das Haubeninnere vorragen. Die Rastmittel sind in Aufsteckrichtung angeschrägt und weisen eine in Abzugsrichtung gerade Kanten auf, so daß beim Aufschieben eine Einführhilfe für die Basis der Halterungsstange 1 gebildet ist und in Abzugsrichtung eine Sperre gegen unbeabsichtigtes Abnehmen von der Halterungsstange 1 erreicht ist.

Zusätzlich ist die Haube 4 mündungsseitig durch einen umlaufenden, nach außen vorragenden Wulstrand 6 versteift. Zur Montage wird auf die Halterungsstange 1 die Haube 4 lagerichtig aufgeschoben und vorzugsweise verrastet. Auf die Haube 4 kann dann eine großvolumige Umschäumung 3 aufgebracht werden, die mit einem Überzug, beispielsweise aus textilem Material, versehen sein kann. Es ist auch möglich, einen Überzug aus textilem oder anderem Material zu hinterschäumen und dieses Element dann auf die Haube 4 aufzubringen.

In Figur 6 und 7 ist eine Kopfstütze gezeigt , bei der die Haube 4 im Querschnitt wellenartig ausgebildet ist. In den äußersten rechts und links in der Schnittansicht gemäß Figur 7 befindlichen Bereichen, in welche die Raststangen 2 des Bügels 1 zielen, ist eine enge Anpassung der Haube an die Form des Bügels 2 bzw. 1 erfolgt, so daß dieser reibschlüssig umfaßt ist. Im mittleren Bereich der in etwa parallel zu den Einsteckenden verlaufenden Schenkel 7 des Bügels 1 sind innenseitig der Haube Führungs- und Haltemittel 8 in Form von versteifenden Stegen ausgebildet, die von der Rückwandung zur Vorderwandung der Haube 4 verlaufen und diese federnd versteifen. Die Federungswirkung wird durch eine im Querschnitt V-förmige Ausbildung der Versteifungsstege erreicht. Diese Versteifungsstege 8 dienen zusätzlich als Führung für die Bereiche 7 der Halterungsstange 1.

Die Erfindung ist nicht auf das Ausführungsbeispiel beschränkt, sondern im Rahmen des im Anspruch 1 definierten Schutzbereichs vielfach variabel.

## Patentansprüche

1. Kopfstütze für Kraftfahrzeuge, bestehend aus einer im wesentlichen U-förmigen oder M-förmigen Halterungsstange (1) mit einer den eigentlichen Stützbereich umgebenen Umhüllung aus Schaumstoff (3), wobei auf den Stützbereich der Halterungsstange (1) eine hohle Haube (4) aufgesteckt ist und die umhüllung aus Schaumstoff (3) auf die Haube (4) aufgebracht ist, **dadurch gekennzeichnet, daß** die Halterungsstange (1) parallel zueinander abragende Einsteckenden (2) aufweist, die Haube (4) im Querschnitt flach U-förmig ausgebildet ist, so daß ihr Boden an den entsprechenden, den Einsteckenden (2) der Halterungsstange (1) abgewandten Basisbereichen der Halterungsstange (1) anliegt, die Haube (4) auf die Basis der Halterungsstange (1) aufrastbar ist, wobei die Rastmittel (5) an der Haube (4) angeformt sind und in das Haubeninnere vorragen.

2. Kopfstütze nach Anspruch 1, **dadurch gekennzeichnet, daß** die hohle Haube (4) aus Kunststoff besteht.

3. Kopfstütze nach Anspruch 1 oder 2, **dadurch gekennzeichnet, daß** die im Querschnitt flach U-förmig ausgebildete Haube (4) mit ihrer Stirnfläche an den entsprechenden Stirnbereichen der Halterungsstange (1) und ihre Seitenflächen an den entsprechenden einander abgewandten Seitenbereichen der Halterungsstange (1) anliegen.

4. Kopfstütze nach einem der Ansprüche 1 bis 3, **dadurch gekennzeichnet, daß** die Haube (4) mündungsseitig durch einen umlaufenden Wulstrand 6 versteift ist.

5. Kopfstütze nach Anspruch 4, **dadurch gekennzeichnet, daß** der Wulstrand (6) nach außen vorragt.

## Claims

1. Head-rest for motor vehicles, comprising an essentially U-shaped or M-shaped holding rod (1) which has a foam-material sheathing (3) surrounding the actual supporting area, a hollow hood (4) being pushed onto the supporting area of the holding rod (1) and the foam-material sheathing (3) being mounted on the hood (4), characterized in that the holding rod (1) has mutually parallel, projecting insertion ends (2), the hood (4) is flat and of U-shaped design in cross section so that its bottom rests against the corresponding base regions of the holding rod (1), which base regions are remote from the insertion ends (2) of the holding rod (1), and the hood (4) can be latched onto the base of the holding rod (1), the latching means (5) being formed on the hood (4) and projecting into the hood interior.

2. Head-rest according to Claim 1, characterized in that the hollow hood (4) ist composed of plastics material.

3. Head-rest according to Claim 1 or 2, characterized in that the hood (4), which is flat and of U-shaped design in cross section, rests by means of its end surface against the corresponding end regions of the holding rod (1) and its lateral areas rest against the corresponding, mutually remote lateral areas of the holding rod (1).

4. Head-rest according to one of Claims 1 to 3, characterized in that the hood (4) is reinforced on the opening side by a circumferential beaded rim 6.

5. Head-rest according to Claim 4, characterized in that the beaded rim (6) projects outwards.

## Revendications

1. Appui-tête pour véhicules automobiles, constitué d'une tige de fixation (1) essentiellement en forme de U ou de M, avec une enveloppe en matière alvéolaire (3) entourant la région d'appui proprement dite, un capot creux (4) étant emboîté sur la région d'appui de la tige de fixation (1) et l'enveloppe en matière alvéolaire (3) étant apposée sur le capot (4), **caractérisé** en ce que la tige de fixation (1) présente des extrémités d'emboîtement (2) faisant saillie vers le bas parallèlement entre elles, le capot (4) est réalisé avec une section plate en U, de sorte que son fond s'applique contre les régions de base correspondantes, opposées aux extrémités d'emboîtement (2), de la tige de fixation (1), et le capot (4) peut être enclenché sur la base de la tige de fixation (1), les moyens d'enclenchement (5) étant formés sur le capot (4) et dépassant à l'intérieur du capot.

2. Appui-tête selon la revendication 1, **caractérisé** en ce que le capot creux (4) est réalisé en matière plastique.

3. Appui-tête selon la revendication 1 ou 2, **caractérisé** en ce que le capot (4) réalisé avec une section plate en U s'applique par sa face frontale contre les régions frontales correspondantes de la tige de fixation (1), et ses faces latérales s'appliquent contre les régions latérales correspondantes, mutuellement opposées, de la tige de fixation (1).

4. Appui-tête selon une des revendications 1 à 3, **caractérisé** en ce que le capot (4) est renforcé sur son côté d'ouverture par un bourrelet entourant (6).

5. Appui-tête selon la revendication 4, **caractérisé** en ce que le bourrelet entourant (6) dépasse vers l'extérieur.
